# EUROPÄISCHE PATENTSCHRIFT

(11) **EP 2 804 690 B1**
(45) Veröffentlichungstag und Bekanntmachung des Hinweises auf die Patenterteilung: **03.02.2016**
(21) Anmeldenummer: 12795790.0
(22) Anmeldetag: 30.11.2012
(51) Int. Cl.: B01D 53/14, B01D 53/62

(54) **VERFAHREN ZUR ABSORPTION VON CO2 AUS EINER GASMISCHUNG MIT EINEM AMINE ENTHALTENDEN ABSORPTIONSMEDIUM**
PROCESS FOR ABSORBING CO2 FROM A GAS MIXTURE WITH AN ABSORPTION MEDIUM COMPRISING AMINES
PROCÉDÉ D'ABSORPTION DE CO2 D'UN MÉLANGE GAZEUX AVEC UN ABSORBANT CONTENANT DES AMINES

(30) Priorität: 16.01.2012 DE 102012200566
(43) Veröffentlichungstag der Anmeldung: 26.11.2014
(73) Patentinhaber: Evonik Degussa GmbH, 45128 Essen (DE)
(72) Erfinder: SCHRAVEN, Alexander, 47661 Issum (DE); RINKER, Stefanie, 46569 Hünxe (DE); WILLY, Benjamin, 40211 Düsseldorf (DE); ROLKER, Jörn, 63755 Alzenau (DE); SCHNEIDER, Rolf, 63584 Gründau-Rothenbergen (DE); DEMBKOWSKI, Daniel, 45128 Essen (DE); NEUMANN, Manfred, 45770 Marl (DE); NIEMEYER, Jochen, 48153 Münster (DE)
(86) Internationale Anmeldenummer: PCT/EP2012/074019
(87) Internationale Veröffentlichungsnummer: WO 2013/107551

(56) Entgegenhaltungen:
- WO-A1-2004/082809
- WO-A1-2011/080405
- US-A1- 2011 256 043

## Beschreibung

Die Erfindung betrifft ein Verfahren zur Absorption von CO₂ aus einer Gasmischung.

In zahlreichen industriellen und chemischen Prozessen treten Gasströme auf, die einen unerwünschten Gehalt von CO₂ aufweisen, dessen Gehalt für die weitere Verarbeitung, für den Transport oder für eine Vermeidung von CO₂-Emissionen verringert werden muss.

Im industriellen Maßstab werden zur Absorption von CO₂ aus einer Gasmischung üblicherweise wässrige Lösungen von Alkanolaminen als Absorptionsmedium eingesetzt. Das beladene Absorptionsmedium wird durch Erwärmen, Entspannen auf einen niedrigeren Druck oder Strippen regeneriert, wobei das Kohlendioxid desorbiert wird. Nach dem Regenerationsprozess kann das Absorptionsmedium wieder verwendet werden. Diese Verfahren sind zum Beispiel in Rolker, J.; Arlt, W.; "Abtrennung von Kohlendioxid aus Rauchgasen mittels Absorption" in Chemie Ingenieur Technik 2006, 78, Seiten 416 bis 424 sowie in Kohl, A. L.; Nielsen, R. B., "Gas Purification", 5. Aufl., Gulf Publishing, Houston 1997 beschrieben.

Diese Verfahren haben jedoch den Nachteil, dass zur Abtrennung von CO₂ durch Absorption und nachfolgende Desorption relativ viel Energie benötigt wird und dass bei der Desorption nur ein Teil des absorbierten CO₂ wieder desorbiert wird, so dass in einem Zyklus aus Absorption und Desorption die Kapazität des Absorptionsmediums nicht ausreichend ist.

Als Alternativen zu Alkanolaminen wurden im Stand der Technik Diamine, Oligoamine und Polyamine vorgeschlagen.

WO 2004/082809 beschreibt die Absorption von CO₂ aus Gasströmen mit konzentrierten wässrigen Lösungen von Diaminen der Formel (R¹)₂N(CR²R³)ₙN(R¹)₂ wobei R¹ ein C₁-C₄-Alkylrest und R², R³ unabhängig voneinander Wasserstoff oder ein C₁-C₄-Alkylrest sein können. Für n = 4 sind explizit die Diamine Tetramethyl-1,4-butandiamin und Tetraethyl-1,4-butandiamin offenbart. Die Diamine mit zwei tertiären Aminogruppen haben den Nachteil, dass die Absorption von CO₂ nur langsam erfolgt.

WO 2010/012883 beschreibt die Absorption von CO₂ aus Gasströmen mit einer wässrigen Lösung von N,N,N',N'-Tetramethyl-1,6-hexandiamin. Um eine Phasentrennung in zwei flüssige Phasen während der Absorption zu vermeiden muss dem Absorptionsmedium zusätzlich noch ein primäres oder sekundäres Amin zugesetzt werden.

WO 2011/080405 beschreibt die Absorption von CO₂ aus Gasströmen mit wässrigen Lösungen von Diaminen der Formel R¹R²N (CR⁴R⁵) (CR⁶R⁷)ₐNHR³ wobei R¹, R² unabhängig voneinander ein C₁-C₁₂-Alkylrest oder ein C₁-C₁₂-Alkoxyalkylrest sein können, R³ bis R⁷ unabhängig voneinander Wasserstoff, ein C₁-C₁₂-Alkylrest oder ein C₁-C₁₂-Alkoxyalkylrest sein können, a = 1 bis 11 ist und R³ von R¹ und R² verschieden ist. Für a = 3 ist explizit das Diamin N1,N1-Diethyl-1,4-pentandiamin offenbart.

WO 2011/080406 beschreibt die Absorption von CO₂ aus Gasströmen mit wässrigen Lösungen von Triaminen. Für das Triamin N1,N1-Diethyl-N4-dimethylaminoethyl-1,4-pentandiamin wird eine im Vergleich zu Ethanolamin und Methyldiethanolamin erhöhte Absorptionskapazität offenbart.

Es wurde nun überraschend gefunden, dass sich mit Aminen der Formel (I) eine gegenüber den aus WO 2004/082809 und WO 2011/080405 bekannten Aminen verbesserte Kapazität für die Absorption von CO₂ erzielen lässt und in einer nachfolgenden Desorption durch Erhitzen ein besonders niedriger Restgehalt an CO₂ erzielt werden kann.

Gegenstand der Erfindung ist deshalb ein Verfahren zur Absorption von CO₂ aus einer Gasmischung durch in Kontakt bringen der Gasmischung mit einem Absorptionsmedium, das Wasser und mindestens ein Amin der Formel (I) 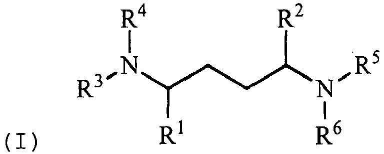 umfasst, worin
R¹ Wasserstoff oder ein Alkylrest mit 1 bis 4 Kohlenstoffatomen ist,
R² ein Alkylrest mit 1 bis 4 Kohlenstoffatomen ist,
R³ und R⁵ unabhängig voneinander Alkylreste mit 1 bis 6 Kohlenstoffatomen sind und
R⁹ und R⁶ unabhängig voneinander Wasserstoff oder Alkylreste mit 1 bis 6 Kohlenstoffatomen sind, wobei R³, R⁴ gemeinsam ein überbrückender Rest -(CH₂)ₙ-, -CH₂CH₂OCH₂CH₂- oder -CH₂CH₂NR⁷CH₂CH₂- sein können mit n = 2 bis 5 und R⁷ = Wasserstoff oder Alkylrest mit 1 bis 6 Kohlenstoffatomen.

Die im erfindungsgemäßen Verfahren verwendten Amine der Formel (I) sind Diamine, bei denen die Stickstoffatome durch eine Kette aus 4 Kohlenstoffatomen voneinander getrennt sind, wobei diese Kette an mindestens einem der zu den Stickstoffatomen benachbarten Kohlenstoffatome einen Alkylrest mit 1 bis 4 Kohlenstoffatomen trägt. Beide Stickstoffatome sind durch Alkylgruppen mit 1 bis 6 Kohlenstoffatomen weiter substituiert, sodass jeweils eine sekundäre oder tertiäre Aminogruppe vorliegt. Eines der beiden Stickstoffatome kann auch Teil eines gesättigten Heterocyclus sein, z.B. eines Pyrrolidins, Piperidins, Morpholins oder Piperazins.

Die Reste R¹ und R² in Formel (I) können Alkylreste mit 1 bis 4 Kohlenstoffatomen sein, wobei unverzweigte n-Alkylreste bevorzugt sind. Vorzugsweise werden Amine der Formel (I) verwendet, bei denen die die Stickstoffatome verbindende Kette nur einen Alkylsubstituenten trägt, d.h. der Rest R¹ in Formel (I) ist Wasserstoff. Besonders bevorzugt ist die die Stickstoffatome verbindende Kette mit einer Methylgruppe substituiert, d.h. der Rest R² in Formel (I) ist Methyl.

Die Reste R³ bis R⁶ in Formel (I) können Alkylreste mit 1 bis 6 Kohlenstoffatomen sein, die cyclisch oder acyclisch sein können, wobei unverzweigte n-Alkylreste bevorzugt sind. In einer bevorzugten Ausführungsform ist eines der beiden Stickstoffatome des Amins der Formel (I) ein tertiäres Amin, d.h. der Rest R⁴ in Formel (I) ist nicht ein Wasserstoffatom. Besonders bevorzugt weist das Amin der Formel (I) eine sekundäre und eine tertiäre Aminogruppe auf, d.h. der Rest R⁶ in Formel (I) ist ein Wasserstoffatom und der Rest R⁴ in Formel (I) ist nicht ein Wasserstoffatom. Bevorzugt weist das tertiäre Stickstoffatom zwei identische Reste R³ und R⁴ auf, die besonders bevorzugt Methylgruppen oder Ethylgruppen sind oder mit dem Stickstoffatom einen Morpholinring bilden, d.h. R³ und R⁴ bilden einen überbrückenden Rest -CH₂CH₂OCH₂CH₂-.

Besonders bevorzugte Amine der Formel (I) sind N1,N1,N4-Trimethyl-1,4-diaminopentan, N1,N1-Dimethyl-N4-ethyl-1,4-diaminopentan, N1,N1-Dimethyl-N4-propyl-1,4-diaminopentan, N1,N1-Diethyl-N4-methyl-1,4-diaminopentan, N1,N1,N4-Triethyl-1,4-diaminopentan, N1,N1-Diethyl-N4-propyl-1,4-diaminopentan, N-(4-Methylamino)-pentylmorpholin, N-(4-Ethylamino)-pentylmorpholin und N-(4-Propylamino)-pentylmorpholin.

Amine der Formel (I) lassen sich nach bekannten Verfahren herstellen. In einer ersten Stufe wird gemäß Gleichung (1) ein Nitroalkan mit einer α,β-ungesättigten Carbonylverbindung in einer Michael-Addition umgesetzt, wie in J. Am. Chem. Soc. 74 (1952) 3664-3668 beschrieben.

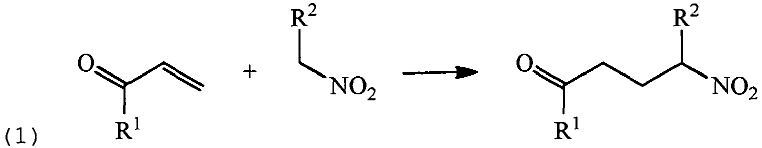

In einer weiteren Stufe wird gemäß Gleichung (2) eine reduktive Aminierung mit einem Alkylamin an der Carbonylgruppe des Produkts der ersten Stufe und eine nachfolgende Reduktion der Nitrogruppe durchgeführt, zum Beispiel wie in US 4,910,343 beschrieben.

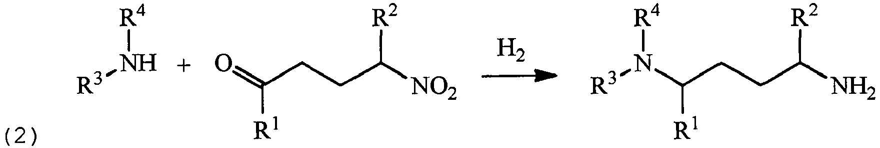

Substituenten R⁵ und R⁶ können danach durch weitere reduktive Aminierung eingeführt werden, wie in Gleichung (3) für die Einführung von R⁵ = Ethyl durch reduktive Aminierung gezeigt.

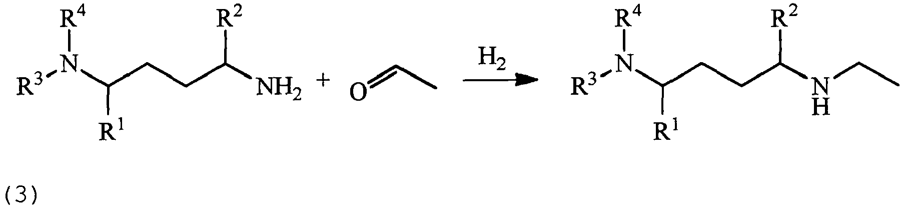

Das im erfindungsgemäßen Verfahren verwendte Arbeitsmedium umfasst Wasser und mindestens ein Amin der Formel (I). Der Gehalt an Aminen der Formel (I) im Absorptionsmedium beträgt vorzugsweise 10 bis 60 Gew.-%, besonders bevorzugt 20 bis 50 Gew.-%. Der Gehalt an Wasser im Absorptionsmedium beträgt vorzugsweise 40 bis 80 Gew.-%.

Das Absorptionsmedium kann zusätzlich zu Wasser und Aminen der Formel (I) noch mindestens ein sterisch ungehindertes primäres oder sekundäres Amin als Aktivator enthalten. Ein sterisch ungehindertes primäres Amin im Sinne der Erfindung ist ein primäres Amin, bei dem die Aminogruppe an ein Kohlenstoffatom gebunden ist, an das mindestens ein Wasserstoffatom gebunden ist. Ein sterisch ungehindertes sekundäres Amin im Sinne der Erfindung ist ein sekundäres Amin, bei dem die Aminogruppe an Kohlenstoffatome gebunden ist, an die jeweils mindestens zwei Wasserstoffatome gebunden sind. Der Gehalt an sterisch ungehinderten primären oder sekundären Aminen beträgt vorzugsweise 0,1 bis 10 Gew.-%, besonders bevorzugt 0,5 bis 8 Gew.-%. Als Aktivator eignen sich aus dem Stand der Technik bekannte Aktivatoren, wie zum Beispiel Monoethanolamin, Piperazin und 3-(Methylamino)-propylamin. Der Zusatz eines Aktivators führt zu einer Beschleunigung der Absorption von CO₂ aus der Gasmischung, ohne dass Absorptionskapazität verloren geht.

Das Absorptionsmedium kann zusätzlich zu Wasser und Aminen noch ein oder mehrere physikalische Lösungsmittel enthalten. Der Anteil an physikalischen Lösungsmitteln kann dabei bis zu 50 Gew.-% betragen. Als physikalische Lösungsmittel eignen sich Sulfolan, aliphatische Säureamide, wie N-Formylmorpholin, N-Acetylmorpholin, N-Alkylpyrrolidone, insbesondere N-Methyl-2-pyrrolidon, oder N-Alkylpiperidone, sowie Diethylenglykol, Triethylenglykol und Polyethylenglykole und deren Alkylether, insbesondere Diethylenglykolmonobutylether. Vorzugsweise enthält das Absorptionsmedium jedoch kein physikalisches Lösungsmittel.

Das Absorptionsmedium kann zusätzlich noch Additive, wie Korrosionsinhibitoren, benetzungsfördernde Additive und Entschäumer aufweisen.

Als Korrosionsinhibitoren können im Absorptionsmedium alle Stoffe verwendet werden, die dem Fachmann zur Absorption von CO₂ unter Verwendung von Alkanolaminen als geeignete Korrosionsinhibitoren bekannt sind, insbesondere die in US 4,714,597 beschriebenen Korrosionsinhibitoren. Die Menge an Korrosionsinhibitoren kann im erfindungsgemäßen Verfahren deutlich geringer als bei einem üblichen, Ethanolamin enthaltenden Absorptionsmedium gewählt werden, da das im erfindungsgemäßen Verfahren verwendete Absorptionsmedium gegenüber metallischen Werkstoffen deutlich weniger korrosiv ist als die üblicherweise verwendeten Ethanolamin enthaltenden Absorptionsmedien.

Als benetzungsförderndes Additiv werden vorzugsweise die aus WO 2010/089257 Seite 11, Zeile 18 bis Seite 13, Zeile 7 bekannten nichtionischen Tenside, zwitterionischen Tenside und kationischen Tenside verwendet.

Als Entschäumer können im Absorptionsmedium alle Stoffe verwendet werden, die dem Fachmann zur Absorption von CO₂ unter Verwendung von Alkanolaminen als geeignete Entschäumer bekannt sind.

Im erfindungsgemäßen Verfahren kann die Gasmischung ein Erdgas, ein Methan enthaltendes Biogas aus einer Fermentation, Kompostierung oder Kläranlage, ein Verbrennungsabgas, ein Abgas aus einer Kalzinierungsreaktion, wie dem Brennen von Kalk oder der Herstellung von Zement, ein Restgas aus einem Hochofenprozess zur Eisenherstellung oder eine aus einer chemischen Umsetzung resultierende Gasmischung, wie beispielsweise ein Kohlenmonoxid und Wasserstoff enthaltendes Synthesegas oder ein Reaktionsgas einer Wasserstoffherstellung durch Dampfreformieren sein. Vorzugsweise ist die Gasmischung ein Verbrennungsabgas, ein Erdgas oder ein Biogas, besonders bevorzugt ein Verbrennungsabgas, zum Beispiel aus einem Kraftwerk.

Die Gasmischung kann zusätzlich zu CO₂ noch weitere saure Gase enthalten, wie beispielsweise COS, H₂S, CH₃SH oder SO₂. In einer bevorzugten Ausführungsform enthält die Gasmischung zusätzlich zu CO₂ noch H₂S. Ein Verbrennungsabgas wird vorzugsweise vorher entschwefelt, d.h. SO₂ wird aus der Gasmischung mit einem aus dem Stand der Technik bekannten Entschwefelungsverfahren, vorzugsweise durch eine Gaswäsche mit Kalkmilch, entfernt, bevor das erfindungsgemäße Absorptionsverfahren durchgeführt wird.

Die Gasmischung weist vor dem in Kontakt bringen mit dem Absorptionsmedium vorzugsweise einen Gehalt an CO₂ im Bereich von 0,1 bis 50 Vol-% auf, besonders bevorzugt im Bereich von 1 bis 20 Vol-% und am meisten bevorzugt im Bereich von 10 bis 20 Vol-%.

Die Gasmischung kann zusätzlich zu CO₂ noch Sauerstoff enthalten, vorzugsweise mit einem Anteil von 0,1 bis 25 Vol-% und besonders bevorzugt mit einem Anteil von 0,1 bis 10 Vol-%.

Für das erfindungsgemäße Verfahren können alle zum in Kontakt bringen einer Gasphase mit einer Flüssigphase geeigneten Apparate verwendet werden, um die Gasmischung mit dem Absorptionsmedium in Kontakt zu bringen. Vorzugsweise werden aus dem Stand der Technik bekannte Gaswäscher oder Absorptionskolonnen verwendet, beispielsweise Membrankontaktoren, Radialstromwäscher, Strahlwäscher, Venturi-Wäscher, Rotations-Sprühwäscher Füllkörperkolonnen, Packungskolonnen oder Bodenkolonnen. Besonders bevorzugt werden Absorptionskolonnen im Gegenstrombetrieb verwendet.

Im erfindungsgemäßen Verfahren wird die Absorption von CO₂ vorzugsweise bei einer Temperatur des Absorptionsmediums im Bereich von 0 bis 80°C, besonders bevorzugt 20 bis 70°C, durchgeführt. Bei Verwendung einer Absorptionskolonne im Gegenstrombetrieb beträgt die Temperatur des Absorptionsmediums besonders bevorzugt 30 bis 60°C beim Eintritt in die Kolonne und 35 bis 70°C beim Austritt aus der Kolonne.

Vorzugsweise wird die CO₂ enthaltende Gasmischung bei einem anfänglichen Partialdruck von CO₂ von 0,01 bis 4 bar mit dem Absorptionsmedium in Kontakt gebracht. Besonders bevorzugt beträgt der anfängliche Partialdruck von CO₂ in der Gasmischung von 0,05 bis 3 bar. Der Gesamtdruck der Gasmischung liegt vorzugsweise im Bereich von 0,8 bis 50 bar, besonders bevorzugt 0,9 bis 30 bar.

In einer bevorzugten Ausführungsform des erfindungsgemäßen Verfahrens wird im Absorptionsmedium absorbiertes CO₂ durch Erhöhen der Temperatur und/oder Verringern des Drucks wieder desorbiert und das Absorptionsmedium nach dieser Desorption von CO₂ wieder zur Absorption von CO₂ verwendet. Vorzugsweise erfolgt die Desorption durch Erhöhen der Temperatur. Durch einen solchen zyklischen Prozess aus Absorption und Desorption kann CO₂ aus der Gasmischung ganz oder teilweise abgetrennt und getrennt von anderen Komponenten der Gasmischung erhalten werden.

Alternativ zum Erhöhen der Temperatur oder dem Verringern des Drucks oder zusätzlich zu einer Temperaturerhöhung und/oder Druckverringerung kann auch eine Desorption durch Strippen des mit CO₂ beladenen Absorptionsmediums mit einem inerten Gas, wie zum Beispiel Luft oder Stickstoff, durchgeführt werden.

Wenn bei der Desorption von CO₂ zusätzlich auch Wasser aus dem Absorptionsmedium entfernt wird, kann dem Absorptionsmedium vor der Wiederverwendung zur Absorption gegebenenfalls noch Wasser zugesetzt werden.

Für die Desorption können alle Apparate verwendet werden, die aus dem Stand der Technik zur Desorption eines Gases aus einer Flüssigkeit bekannt sind. Vorzugsweise wird die Desorption in einer Desorptionskolonne durchgeführt. Alternativ kann die Desorption von CO₂ auch in einer oder mehreren Flash-Verdampfungsstufen durchgeführt werden.

Die Desorption wird vorzugsweise bei einer Temperatur im Bereich von 50 bis 200°C durchgeführt. Bei einer Desorption durch Erhöhen der Temperatur wird die Desorption von CO₂ vorzugsweise bei einer Temperatur des Absorptionsmediums im Bereich von 50 bis 180°C, besonders bevorzugt 80 bis 150°C, durchgeführt. Die Temperatur bei der Desorption liegt dabei vorzugsweise mindestens 20°C, besonders bevorzugt mindestens 30°C, oberhalb der Temperatur bei der Absorption. Bevorzugt wird bei einer Desorption durch Erhöhen der Temperatur ein Strippen mit Wasserdampf, der durch Verdampfen eines Teils des Absorptionsmediums erzeugt wird, durchgeführt.

Bei einer Desorption durch Verringern des Drucks wird die Desorption vorzugsweise bei einem Druck im Bereich von 0,01 bis 10 bar durchgeführt.

Da das im erfindungsgemäßen Verfahren verwendete Absorptionsmedium eine hohe Absorptionskapazität für CO₂ aufweist und im erfindungsgemäßen Verfahren als homogene Lösung vorliegt, ohne dass es bei Absorption von CO₂ zur Ausfällung eines Feststoffs kommt, kann das erfindungsgemäße Verfahren in einfach aufgebauten Anlagen eingesetzt werden und erreicht dabei eine im Vergleich zu den aus dem Stand der Technik bekannten Aminen verbesserte Absorptionsleistung für CO₂. Gleichzeitig wird im Vergleich zu Ethanolamin wesentlich weniger Energie zur Desorption von CO₂ benötigt.

In einer bevorzugten Ausführungsform des erfindungsgemäßen Verfahrens erfolgt die Desorption durch Strippen mit einem Inertgas, wie beispielsweise Luft oder Stickstoff, in einer Desorptionskolonne. Das Strippen in der Desorptionskolonne erfolgt vorzugsweise bei einer Temperatur des Absorptionsmediums im Bereich von 60 bis 100°C. Durch das Strippen kann mit geringem Energiebedarf ein niedriger Restgehalt des Absorptionsmediums an CO₂ nach Desorption erreicht werden.

Die nachfolgenden Beispiele verdeutlichen die Erfindung, ohne jedoch den Gegenstand der Erfindung zu beschränken.

### Beispiele

### Beispiel 1

### Herstellung von N1,N1,N4-Triethyl-1,4-diaminopentan

In einem gerührten Autoklav wurden 52.9 g (1.20 mol) Acetaldehyd und 50 ml Methanol vorgelegt. Anschließend wurden 2.90 g 10% Palladium auf Aktivkohle (wasserfeucht), 130 ml Methanol und 196 g N1,N1-Diethyl-1,4-diaminopentan (1.20 mol) zugegeben. Der Autoklav wurde verschlossen und mit Wasserstoff auf einen Druck von 40 bar gebracht. Die Mischung wurde dann unter Wasserstoffatmosphäre innerhalb von 5 h von 40°C auf 100°C erhitzt, wobei Wasserstoff bis zu einem Druck von 40 bar nachdosiert wurde, wenn der Druck im Autoklav unter 20 bar fiel. Anschließend wurde der Katalysator abfiltriert und nach Abdestillieren des Lösungsmittels der Rückstand destilliert. Es wurden 135 g (0.724 mol, 60%) N1,N1,N4-Triethyl-1,4-diaminopentan als farblose Flüssigkeit erhalten.

### Beispiel 2

### Herstellung von N1,N1-Diethyl-N4-propyl-1,4-diaminopentan

Beispiel 1 wurde wiederholt, wobei 74.7g (1.26 mol) Propionaldehyd und 100 ml Methanol vorgelegt wurden und danach 100 ml Methanol statt 130 ml Methanol zugegeben wurden. Es wurden 143 g (0.714 mol, 59%) N1,N1-Diethyl-N4-propyl-1,4-diaminopentan als farblose Flüssigkeit

### Beispiel 3

### Herstellung von N1,N1-Diethyl-N4-isopropyl-1,4-diaminopentan

In einem gerührten Autoklav wurden 105 g (1.80 mol) Aceton vorgelegt. Anschließend wurden 3.60 g 10% Palladium auf Aktivkohle (wasserfeucht), 180 ml Methanol und 245 g N1,N1-Diethyl-1,4-diaminopentan (1.50 mol) zugegeben. Der Autoklav wurde verschlossen und mit Wasserstoff auf einen Druck von 40 bar gebracht. Die Mischung wurde dann unter Wasserstoffatmosphäre innerhalb von 8 h von 40°C auf 120°C erhitzt, wobei Wasserstoff bis zu einem Druck von 40 bar nachdosiert wurde, wenn der Druck im Autoklav unter 20 bar fiel. Anschließend wurde der Katalysator abfiltriert und nach Abdestillieren des Lösungsmittels der Rückstand destilliert. Es wurden 260 g (1.30 mol, 87%) N1,N1-Diethyl-N4-isopropyl-1,4-diaminopentan als farblose Flüssigkeit erhalten.

### Beispiele 4 bis 10

### Bestimmung der Absorptionskapazität,für CO₂

Zur Bestimmung der CO₂-Beladung und des CO₂-Hubs wurden 150 g Absorptionsmedium aus 30 Gew.-% Amin und 70 Gew.-% Wasser in einem thermostatisierbaren Behälter mit aufgesetztem und auf 3°C gekühltem Rückflusskühler vorgelegt. Nach Aufheizen auf 40°C bzw. 100°C wurde über eine Fritte am Behälterboden eine Gasmischung aus 14 Vol-% CO₂, 80 Vol-% Stickstoff und 6 Vol-% Sauerstoff mit einer Flussrate von 59 l/h durch das Absorptionsmedium geleitet und die CO₂-Konzentration im aus dem Rückflusskühler austretenden Gasstrom über die IR-Absorption mit einem CO₂-Analysator bestimmt. Durch Integration der Differenz des CO₂-Gehalts im eingeleiteten Gasstrom und im austretenden Gasstrom wurde die aufgenommene CO₂-Menge ermittelt und die Gleichgewichtsbeladung des Absorptionsmediums mit CO₂ berechnet. Der CO₂-Hub wurde als Differenz der bei 40°C und 100°C aufgenommenen CO₂-Mengen berechnet. Die so bestimmten Gleichgewichtsbeladungen bei 40 und 100°C in mol CO₂ / mol Amin und der CO₂-Hub in mol CO₂ / kg Absorptionsmedium sind in Tabelle 1 angeführt.

**Tabelle 1**

| Beispiel | Amin | Beladung bei 40°C in mol/mol | Beladung bei 100°C in mol/mol | CO₂-Hub in mol/kg |
|---|---|---|---|---|
| 4* | Ethanolamin | 0,57 | 0,22 | 1,72 |
| 5* | Methyldiethanolamin | 0,38 | 0,05 | 0,82 |
| 6* | N1,N1,N4,N4-Tetramethyl-1,4-diaminobutan | 1,20 | 0,27 | 1,93 |
| 7* | N1,N1-Diethyl-1,4-diaminopentan | 0,96 | 0,30 | 1,24 |
| 8 | N1,N1,N4-Triethyl-1,4-diaminopentan | 1,99 | 0,17 | 2,93 |
| 9 | N1,N1-Diethyl-N4-propyl-1,4-diaminopentan | 2,04 | 0,25 | 2,68 |
| 10 | N1,N1-Diethyl-N4-isopropyl-1,4-diaminopentan | 1,76 | 0,27 | 2,23 |

| | | | | |
|---|---|---|---|---|
| *nicht erfindungsgemäß | | | | |

## Patentansprüche

1. Verfahren zur Absorption von CO₂ aus einer Gasmischung durch in Kontakt bringen der Gasmischung mit einem Absorptionsmedium, **dadurch gekennzeichnet, dass** das Absorptionsmedium Wasser und mindestens ein Amin der Formel (I) 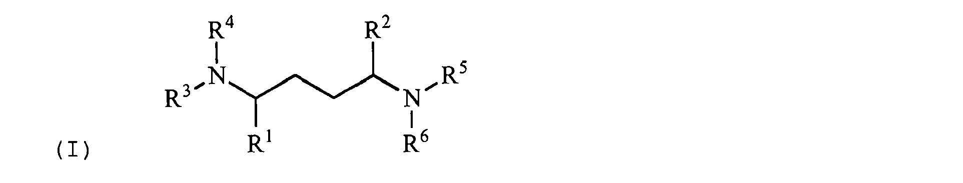 umfasst, worin
R¹ Wasserstoff oder ein Alkylrest mit 1 bis 4 Kohlenstoffatomen ist,
R² ein Alkylrest mit 1 bis 4 Kohlenstoffatomen ist,
R³ und R⁵ unabhängig voneinander Alkylreste mit 1 bis 6 Kohlenstoffatomen sind und
R⁴ und R⁶ unabhängig voneinander Wasserstoff oder Alkylreste mit 1 bis 6 Kohlenstoffatomen sind,
wobei R³, R⁴ gemeinsam ein überbrückender Rest -(CH₂)ₙ-, -CH₂CH₂OCH₂CH₂- oder -CH₂CH₂NR⁷CH₂CH₂- sein können mit n = 2 bis 5 und R⁷ = Wasserstoff oder Alkylrest mit 1 bis 6 Kohlenstoffatomen.

2. Verfahren nach Anspruch 1, **dadurch gekennzeichnet, dass** in Formel (I) R¹ Wasserstoff ist.

3. Verfahren nach Anspruch 1 oder 2, **dadurch gekennzeichnet, dass** in Formel (I) R² ein Methylrest ist.

4. Verfahren nach einem der Ansprüche 1 bis 3, **dadurch gekennzeichnet, dass** in Formel (I) R⁴ nicht Wasserstoff ist.

5. Verfahren nach einem der Ansprüche 1 bis 4, **dadurch gekennzeichnet, dass** in Formel (I) die Reste R³, R⁴ gleich und Methyl oder Ethyl sind oder gemeinsam ein überbrückender Rest -CH₂CH₂OCH₂CH₂- sind.

6. Verfahren nach einem der Ansprüche 1 bis 5, **dadurch gekennzeichnet, dass** der Gehalt an Aminen der Formel (I) im Absorptionsmedium 10 bis 60 Gew.-%, vorzugsweise 20 bis 50 Gew.-% beträgt.

7. Verfahren nach einem der Ansprüche 1 bis 6, **dadurch gekennzeichnet, dass** die Gasmischung ein Verbrennungsabgas, ein Erdgas oder ein Biogas ist.

8. Verfahren nach einem der Ansprüche 1 bis 7, **dadurch gekennzeichnet, dass** im Absorptionsmedium absorbiertes CO₂ durch Erhöhen der Temperatur und/oder Verringern des Drucks wieder desorbiert wird und das Absorptionsmedium nach dieser Desorption von CO₂ wieder zur Absorption von CO₂ verwendet wird.

9. Verfahren nach Anspruch 8, **dadurch gekennzeichnet, dass** die Absorption bei einer Temperatur im Bereich von 0 bis 80°C und die Desorption bei einer höheren Temperatur im Bereich von 50 bis 200°C durchgeführt wird.

10. Verfahren nach Anspruch 8 oder 9, **dadurch gekennzeichnet, dass** die Absorption bei einem Druck im Bereich von 0,8 bis 50 bar und die Desorption bei einem niedrigeren Druck im Bereich von 0,01 bis 10 bar durchgeführt wird.

## Claims

1. Process for absorbing CO₂ from a gas mixture by contacting the gas mixture with an absorption medium, **characterized in that** the absorption medium comprises water and at least one amine of formula (I) 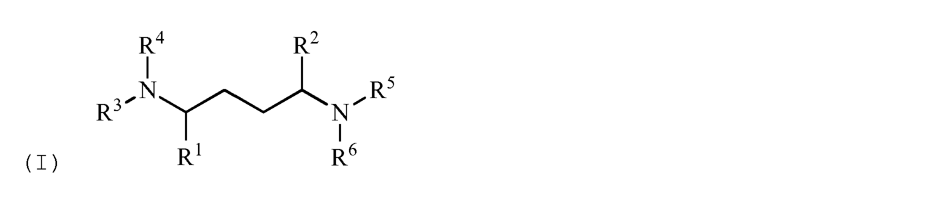 where
R¹ is hydrogen or an alkyl radical having 1 to 4 carbon atoms,
R² is an alkyl radical having 1 to 4 carbon atoms,
R³ and R⁵ are each independently alkyl radicals having 1 to 6 carbon atoms and
R⁴ and R⁶ are each independently hydrogen or alkyl radicals having 1 to 6 carbon atoms
and R³ and R⁴ may combine to form the bridging radical-(CH₂)ₙ-, -CH₂CH₂OCH₂CH₂- or -CH₂CH₂NR⁷CH₂CH₂- where n = 2 to 5 and R⁷ = hydrogen or an alkyl radical having 1 to 6 carbon atoms.

2. Process according to Claim 1, **characterized in that** R¹ in formula (I) is hydrogen.

3. Process according to Claim 1 or 2, **characterized in that** R² in formula (I) is a methyl radical.

4. Process according to any one of Claims 1 to 3, **characterized in that** R⁴ in formula (I) is not hydrogen.

5. Process according to any one of Claims 1 to 4, **characterized in that** the radicals R³ and R⁴ in formula (I) are both methyl or both ethyl or combine to form the bridging radical -CH₂CH₂OCH₂CH₂.

6. Process according to any one of Claims 1 to 5, **characterized in that** the content of amines of formula (I) in the absorption medium is 10 to 60 wt%, preferably 20 to 50 wt%.

7. Process according to any one of Claims 1 to 6, **characterized in that** the gas mixture is a combustion flue gas, a natural gas or a biogas.

8. Process according to any one of Claims 1 to 7, **characterized in that** the CO₂ absorbed in the absorption medium is desorbed again by raising the temperature and/or lowering the pressure and the absorption medium is reused for absorbing CO₂ following this desorption of CO₂.

9. Process according to Claim 8, **characterized in that** the absorption is carried out at a temperature in the range from 0 to 80°C and the desorption is carried out at a higher temperature in the range from 50 to 200°C.

10. Process according to Claim 8 or 9, **characterized in that** the absorption is carried out at a pressure in the range from 0.8 to 50 bar and the desorption is carried out at a **lower** pressure in the range from 0.01 to 10 bar.

## Revendications

1. Procédé d'absorption de CO₂ à partir d'un mélange gazeux par mise en contact du mélange gazeux avec un milieu d'absorption, **caractérisé en ce que** le milieu d'absorption comprend de l'eau et au moins une amine de formule (I) 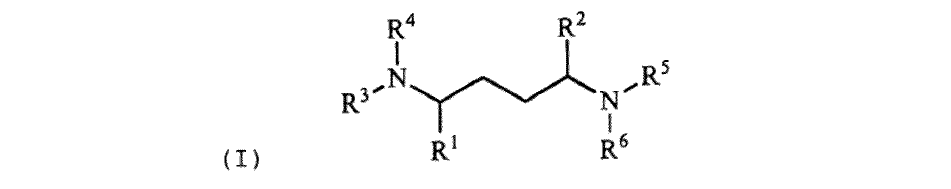 dans laquelle
R¹ représente l'hydrogène ou un radical alkyle de 1 à 4 atomes de carbone,
R² représente un radical alkyle de 1 à 4 atomes de carbone,
R³ et R⁵ représentent indépendamment l'un de l'autre des radicaux alkyle de 1 à 6 atomes de carbone, et
R⁴ et R⁶ représentent indépendamment l'un de l'autre l'hydrogène ou des radicaux alkyle de 1 à 6 atomes de carbone,
R³, R⁴ pouvant représenter ensemble un radical de pontage -(CH₂)ₙ-, -CH₂CH₂OCH₂CH₂- ou -CH₂CH₂NR⁷CH₂CH₂-, avec n = 2 à 5 et R⁷ = hydrogène ou radical alkyle de 1 à 6 atomes de carbone.

2. Procédé selon la revendication 1, **caractérisé en ce que**, dans la formule (I), R¹ représente l'hydrogène.

3. Procédé selon la revendication 1 ou 2, **caractérisé en ce que**, dans la formule (I), R² représente un radical méthyle.

4. Procédé selon l'une quelconque des revendications 1 à 3, **caractérisé en ce que**, dans la formule (I), R⁴ ne représente pas l'hydrogène.

5. Procédé selon l'une quelconque des revendications 1 à 4, **caractérisé en ce que**, dans la formule (I), les radicaux R³, R⁴ sont identiques et représentent méthyle ou éthyle, ou forment ensemble un radical de pontage -CH₂CH₂OCH₂CH₂-.

6. Procédé selon l'une quelconque des revendications 1 à 5, **caractérisé en ce que** la teneur en amines de formule (I) dans le milieu d'absorption est de 10 à 60 % en poids, de préférence de 20 à 50 % en poids.

7. Procédé selon l'une quelconque des revendications 1 à 6, **caractérisé en ce que** le mélange gazeux est un gaz d'échappement de combustion, un gaz naturel ou un biogaz.

8. Procédé selon l'une quelconque des revendications 1 à 7, **caractérisé en ce que** le CO₂ absorbé dans le milieu d'absorption est désorbé par élévation de la température et/ou diminution de la pression, et le milieu d'absorption est réutilisé pour l'absorption de CO₂ après cette désorption de CO₂.

9. Procédé selon la revendication 8, **caractérisé en ce que** l'absorption est réalisée à une température dans la plage allant de 0 à 80 °C et la désorption à une température plus élevée dans la plage allant de 50 à 200 °C.

10. Procédé selon la revendication 8 ou 9, **caractérisé en ce que** l'absorption est réalisée à une pression dans la plage allant de 0,8 à 50 bar et la désorption à une température plus faible dans la plage allant de 0,01 à 10 bar.
